# EUROPEAN PATENT SPECIFICATION

(11) **EP 0 589 742 B1**
(45) Date of publication and mention of the grant of the patent: **04.06.1997**
(21) Application number: 93402144.5
(22) Date of filing: 02.09.1993
(51) Int. Cl.: A43B 21/02, A43B 21/20

(54) **Lift for shoes**
Absatz für Schuh
Talon pour chaussures

(30) Priority: 03.09.1992 JP 260705/92
(43) Date of publication of application: 30.03.1994
(73) Proprietor: HIRO INTERNATIONAL CO., Ltd., Tokyo (JP); K & J OFFICE LIMITED LIABILITY COMPANY, Matsudo-shi, Chiba (JP); K & Y CORPORATION LIMITED LIABILITY COMPANY, Ichikawa-shi, Chiba (JP)
(72) Inventor: Hirai, Giichi, Ichikawa-shi, Chiba (JP)
(74) Representative: Keib, Gérard

(56) References cited:
- EP-A- 0 147 189
- FR-A- 1 465 099
- US-A- 4 224 748
- DATABASE WPI Section Ch, Week 9148, December 1991 Derwent Publications Ltd., London, GB; Class A05, AN 91-348966 [48] & JP-A-03 232 444 (YAZAKI CORP)

## Description

### BACKGROUND OF THE INVENTION :

### Field of the invention :

This invention relates to a lift for shoes, and more particularly to a nonslip lift for shoes, having a high abrasion resistance, a high impact resistance, a high moldability and a high operation efficiency concerning the production of shoes.

### Description of the Prior Art :

A lift for shoes is a member which is provided on a heel, a portion of a shoe receiving the largest weight and having a small area, and which demands (1) a high abrasion resistance, (2) the slippage-free property and (3) a high impact resistance. However, the condition (1) and the conditions (2) and (3) are incompatible with each other. When the condition (1) is satisfied in a conventional lift for shoes, it is difficult to satisfy the conditions (2) and (3), and, conversely, when the conditions (2) and (3) are satisfied therein, it is difficult to satisfy the condition (1).

US-A-4,224,748 describes a shoe sole comprising a metallic support member embedded with the plastic material constituting the heel, the shank member and a portion of the supporting member, with a lift for shoe from a polyurethane resin that has a shore A hardness of at least about 85. This document forms the preamble of independent claim 1.

JP-A-03 232 444 discloses a wear-resistant synthetic resin horseshoe reinforced with aramid fibres and inorganic fibres.

EP-A-O 147 189 describes a construction of an athletic shoe comprising plastic material portions of different wear-resistance located in function of their normal degrees of wear stress during use.

A lift for shoes is molded by mixing various kinds of organic materials together and subjecting the resultant mixture to a high-temperature heat treatment and a complicated step. Since it is necessary that a lift for shoes be molded to a small area, it requires to satisfy not only the conditions (1)-(3) mentioned above but also the conditions including a high moldability and a high workability. Moreover, a lift for shoes also demands the reduction of the manufacturing cost and an increase in the type thereof resulting from diversification of the fashion of ladies' shoes.

However, there are no such lifts for shoes among conventional lifts for shoes that can meet these demands.

A conventional lift for shoes is manufactured by injection molding a thermoplastic polyurethane resin having a high impact resilience and a high abrasion resistance. In order to solve the above-mentioned problems and develop a lift of a higher quality for shoes, using some other manufacturing method and material is difficult at present in view of the necessity of (a) reducing the manufacturing cost, (b) adapting a lift to the diversification of the shape of a heel, (c) improving the productivity, and (d) improving the operation efficiency concerning the production of shoes (in the production of shoes, insert lifts are mostly used). Therefore, the method of molding a thermoplastic polyurethane resin is necessarily followed.

The inventor of the present invention manufactured experimentally in view of the conditions (a)-(d) a lift for shoes out of a material prepared by mixing glass fiber and Teflon powder with a thermoplastic polyurethane resin and melting the resultant mixture but a product sufficiently satisfying the above-mentioned various conditions which a lift for shoes demands could not be obtained.

### SUMMARY OF THE INVENTION:

An object of the present invention is to provide a nonslip lift for shoes which solves the above-mentioned problems of a prior art lift of this kind, and which has a high abrasion resistance, a high impact resistance, a high moldability and a high operation efficiency concerning the production of shoes.

Another object of the present invention is to provide a lift for shoes, capable of obtaining a synergetic effect of the characteristics of a thermoplastic polyurethane resin including a high shock absorbability and a high slip-preventing capability and those of carbon fiber including a high conductivity, a high corrosion resistance and a high abrasion resistance.

Other and further objects, features and advantages of this invention will appear more fully from the following description.

The present invention is directed to a lift for shoes made of a thermoplastic polyurethane resin, characterized in that said thermoplastic polyurethane resin contains carbon fibers cut into linear pieces to a predetermined length in the range of 0.1-10.0 mm so as to be mixed in said polyurethane resin, said thermoplastic polyurethane resin containing said carbon fiber in the range of 1.0-10.0 wt %, said lift being formed by injection molding of said thermoplastic polyurethane resin containing said carbon fiber, and in that said lift possesses a 100% tensile elastic modulus in the range of 10-16 Mpa, a tensile strength in the range of 25-40 Mpa and a tear strength in the range of 10-15 KN/m.

Advantageously, the specific gravity of said carbon fiber is substantially equal to that of said thermoplastic polyurethane resin.

### BRIEF DESCRIPTION OF THE DRAWINGS :

Fig.1 is an enlarged sectional view of the lift for shoes according to the present invention ; and
Fig. 2 is a graph showing the results of tests on durability of the lift for shoes according to the present invention and a general type lift for shoes.

### DESCRIPTION OF THE PREFERRED EMBODIMENT :

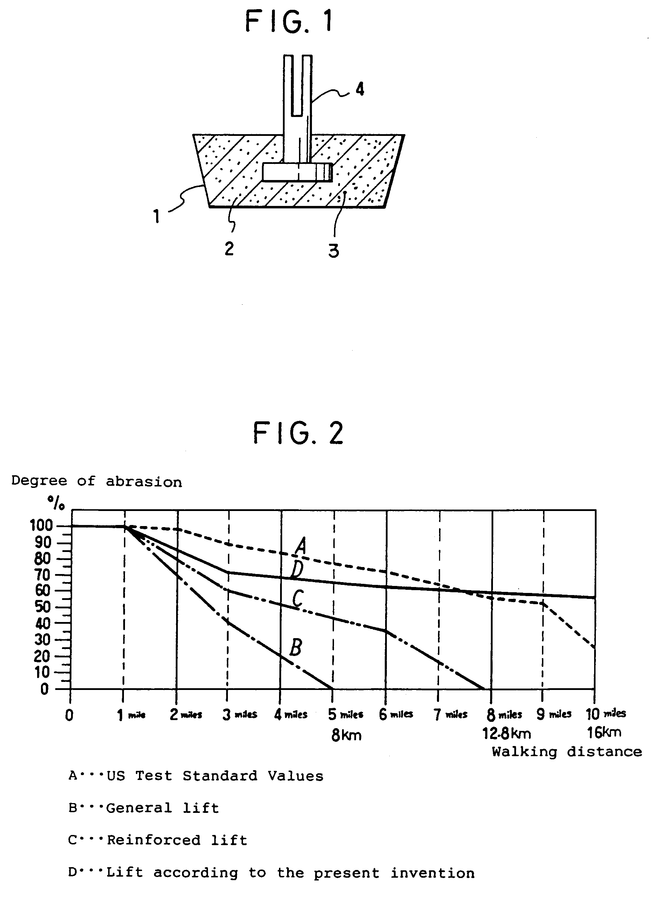

Fig.1 shows a lift 1 for shoes according to the present invention, which is produced by injection molding a thermoplastic resin 2 containing pulverized carbon fiber 3. The illustrated lift 1 is cross-sectionally trapezoidal but the cross-sectional shape thereof is not limited to this shape. The outer shape and size of the lift 1 can also be varied in accordance with the fashionable shape which the shoes demand.

The illustrated lift 1 is provided with an insert pin 4 but the lift 1 is not limited to this type of lift.

The inventor of the present invention considered simply in an initial stage of development of the lift 1 the possibility of utilizing the high rigidity and high elasticity of carbon fiber for the production of a lift. First, he ground carbon fiber to superfine powder and mixed the resultant powder with a polyurethane resin on the basis of his hypothetic idea that, if carbon fiber is exposed on the outer surface of the polyurethane resin, the abrasion resistance of the resin will increase. However, scatter of composition of this mixture occurred during the agitation thereof due to the difference between the specific gravities of these two raw substances, and even an expected degree of strength could not be obtained in a final product.

Therefore, according to the present invention, a carbon fiber assembly consisting of around 50 pieces of carbon fiber is cut to a predetermined length (for example, 8 mm) so as to improve the degrees of mixing of these two kinds of substances, and the resultant carbon fiber is mixed with a polyurethane resin to prepare a material for a lift. The carbon fiber can be distributed uniformly by agitate-mixing this material so as to divide the carbon fiber assembly consisting of around 50 pieces of carbon fiber into finer parts each of which consists of several pieces of carbon fiber.

A polyurethane resin having a hardness of 95-98 has been used in a conventional lift in view of its moldability and shoe-bonding strength. A polyurethane resin having a hardness in such a high degree of range does not sufficiently satisfy the above-mentioned conditions including the slip resistance and impact resistance. The present invention has succeeded in employing a urethane resin of a hardness of around 88-93, which had theretofore been unusable, owing to the carbon fiber mixed therein. According to the present invention, carbon fiber pieces cut to a predetermined length is mixed as mentioned above, in a polyurethane resin of a hardness of around 88-93 in a raw material preparing step, and the resultant mixture is agitate-mixed, the resultant product being injection molded into a lift.

During a lift molding step in which the raw material is subjected to a high-pressure high-temperature treatment, the heat is transmitted uniformly not only to the superficial layer of the material but also to the inner portion thereof owing to the heat conduction action of the carbon fiber. As a result, the inner portion of the lift could also be hardened to the same level as the superficial layer thereof.

According to the present invention, the quantity of carbon fiber contained in a polyurethane resin is preferably in the range of 1.0-10.0 wt%. When the quantity of carbon fiber is less than 1.0 wt%, the abrasion resistance of a final product becomes insufficient, and, when the quantity of carbon exceeds 10.0 wt%, a lift obtained becomes liable to slip and has an insufficient shock absorbability.

The length of the carbon fiber used in the present invention is in the range of 0.1-10.0 mm, and preferably around 3-6 mm. When the length of the carbon fiber is set to less than 1 mm, it causes only an increase in the carbon fiber cutting and pulverizing costs, and no improvement of any desirable effects can be obtained. When the length of the carbon fiber is set in excess of 10.0 mm, the moldability of a thermoplastic polyurethane resin lowers.

In the lift for shoes according to the present invention, pulverized carbon fiber is mixed in a thermoplastic polyurethane resin, an elastic material, as mentioned above, and, therefore, the characteristics of the polyurethane resin and those of the carbon fiber are displayed in a mixed manner to enable a synergetic effect of these materials to be obtained. Namely, the lift for shoes according to the present invention consists of a rigid composite body of a high impact resilience having a high abrasion resistance and an excellent anti-static effect provided by the high shock absorbability and excellent slip-preventing capability of the polyurethane resin and the high conductivity, high corrosion resistance and high abrasion resistance of the carbon fiber.

The lift for shoes according to the present invention has a hardness of around 90-94, a tensile elastic modulus of around 10-16 MPa, a tensile strength of around 25-40 MPa and a tear strength of around 10-15 KN/m. Owing to these characteristics, the lift for shoes according to the present invention has an abrasion resistance several times as high as that of a conventional lift for shoes as well as a high elasticity, a high impact resistance and a high slip resistance. The lift for shoes according to the present invention surpasses by a wide margin the US Standards (which stipulate that a metal pin (header) shall not be exposed in terms of abrasion thereof after a 10-mile walk wearing shoes (with lifts) for a lift for shoes.

Fig. 2 is a graph showing the results of a 16 km walk durability test conducted on a pavement on the lift according to the present invention, a generally-used lift and a generally-used reinforced lift. This test was conducted on the basis of the US Heel Lift Test Standards, and US Test Standard Values are also shown in the drawing for reference. As is clear from this graph, the lift D according to the present invention has a durability far higher than those of the general lift B and reinforced lift C and higher than even the US Test Standard Values A beyond the walking distances of 7.5 miles.

The following table shows the results of comparative abrasion tests on the lift according to the present invention and the products (lifts) of some companies other than the inventor's company. These tests were conducted by manually rubbing a tester to which a lift is attached against an abrasion test sheet, and counting the number of this rubbing actions until the lift has been so worn as to cause a header to be exposed.

| Name of product | Results of tests (Average value) |
|---|---|
| A company, general lift (5 mm thick) | Header was exposed after the lift was rubbed 20 times. |
| A company, reinforced lift (5 mm thick) | Header was exposed after the lift was rubbed 20 times. |
| B company, general lift (5 mm thick) | Header was exposed after the lift was rubbed 13 times. |
| B company, reinforced lift (5 mm thick) | Header was exposed after the lift was rubbed 20 times. |
| C company, reinforced lift (5 mm thick) | Header was exposed after the lift was rubbed 30 times. |
| C company, reinforced lift (5 mm thick) | Header was exposed after the lift was rubbed 40 times. |
| Lift according to the present invention (5 mm thick) | Header was exposed after the lift was rubbed 105 times. |

The present invention has various other types of modified examples as a matter of course. For example, the ground contacting surface of the lift for shoes may be provided with projections and recesses, or the carbon fiber content of the lift for shoes may not be set uniform but may be set to a higher level within the mentioned range in a ground contacting surface portion thereof. Accordingly, the modified examples within the true concept and scope of the present invention are included in the claims thereof.

## Claims

1. A lift (1) for shoes made of a thermoplastic polyurethane resin (2), characterized in that said thermoplastic polyurethane resin (2) contains carbon fibers (3) cut into linear pieces to a predetermined length in the range of 0.1-10.0 mm so as to be mixed in said polyurethane resin (2), said thermoplastic polyurethane resin (2) containing said carbon fiber (3) in the range of 1.0-10.0 wt%, said lift (1) being formed by injection molding of said thermoplastic polyurethane resin (2) containing said carbon fibers (3), and in that said lift (1) possesses a 100% tensile elastic modulus in the range of 10-16 MPa, a tensile strength in the range of 25-40 MPa and a tear strength in the range of 10-15 KN/m.

2. A lift for shoes according to claim 1, wherein the specific gravity of said carbon fibers (3) is substantially equal to that of said thermoplastic polyurethane resin (2).

3. A lift for shoes according to claim 1 or 2, wherein the carbon fibers (3) are cut into linear pieces to a predetermined length in the range of around 3-6 mm.

## Patentansprüche

1. Absatz für Schuhe aus einem thermoplastischen Polyurethanharz (2), **dadurch gekennzeichnet,**
daß das thermoplastische Polyurethanharz (2) Kohlefasern (3) enthält, die in gradlinige Stücke vorbestimmter Länge im Bereich von 0,1 - 10 mm zum Vermischen mit den Polyurethanharz (2) geschnitten sind, wobei das Polyurethanharz (2) die Kohlefasern (3) in einem Bereich von 1,0 - 10 Gewichtsprozent enthält, der Absatz (1) durch Spitzgußverfahren aus dem die Kohlefasern (3) enthaltenen thermoplastischen Polyurethanharz (2) geformt wird, und wobei der Absatz (1) ein 100 %iges (Spannungs-) Elastizitätsmodul im Bereich von 10 - 16 MPa, eine (Spannungs-) Festigkeit im Bereich von 25 - 40 MPa und eine Reißfestigkeit im Bereich von 10 - 15 KN/m aufweist.

2. Absatz für Schuhe nach Anspruch 1, dadurch gekennzeichnet, daß das spezifische Gewicht der Kohlefasern (3) im wesentlichen gleich zu den des thermoplastischen Polyurethanharzes (2) ist.

3. Absatz für Schuhe nach einem der Ansprüche 1 oder 2, dadurch gekennzeichnet, daß die Kohlefasern (3) in gradlinige Stücke auf eine vorbestimmte Länge im Bereich von ca. 3 - 6 mm geschnitten sind.

## Revendications

1. Talonnette (1) pour chaussures, fabriquée en résine polyuréthane thermosplastique (2), caractérisée en ce que ladite résine polyuréthane thermosplastique (2) renferme des fibres de carbone (3) découpées en pièces linéaires selon une longueur prédéterminée qui est comprise dans la plage s'étendant de 0,1 à 10,0 mm de façon à être mélangées à ladite résine polyuréthane (2), ladite résine polyuréthane thermosplastique (2) renfermant lesdites fibres de carbone (3) selon un pourcentage en poids qui est compris dans la plage s'étendant de 1,0 à 10,0 %, ladite talonnette (1) étant formée par moulage par injection de ladite résine polyuréthane thermosplastique (2) renfermant lesdites fibres de carbone (3), et en ce que ladite talonnette (1) possède un module d'élasticité à la traction de 100 % qui est compris dans la plage s'étendant de 10 à 16 MPa, une résistance à la rupture qui est comprise dans la plage s'étendant de 25 à 40 MPa et une résistance au déchirement qui est comprise dans la plage s'étendant de 10 à 15 KN/m.

2. Talonnette pour chaussures selon la revendication 1, dans laquelle la densité desdites fibres de carbone (3) est sensiblement égale à celle de ladite résine polyuréthane thermosplastique (2).

3. Talonnette pour chaussures selon la revendication 1 ou 2, dans laquelle les fibres de carbone (3) sont découpées en pièces linéaires selon une longueur prédéterminée qui est comprise dans la plage s'étendant, approximativement, de 3 à 6 mm.
